# EUROPEAN PATENT SPECIFICATION

(11) **EP 4 283 335 B1**
(45) Date of publication and mention of the grant of the patent: **19.02.2025**
(21) Application number: 23174698.3
(22) Date of filing: 23.05.2023
(51) Int. Cl.: G01S 13/86, G01S 13/88, G01S 13/42, G01S 13/62, G01S 7/41

(54) **DETECTION AND TRACKING OF HUMANS USING SENSOR FUSION TO OPTIMIZE HUMAN TO ROBOT COLLABORATION IN INDUSTRY**
ERKENNUNG UND VERFOLGUNG VON MENSCHEN MITTELS SENSORFUSION ZUR OPTIMIERUNG DER MENSCH-ROBOTER-KOLLABORATION IN DER INDUSTRIE
DÉTECTION ET SUIVI D'ÊTRES HUMAINS À L'AIDE D'UNE FUSION DE CAPTEURS POUR OPTIMISER LA COLLABORATION HOMME-ROBOT DANS L'INDUSTRIE

(30) Priority: 23.05.2022 US 202217751304
(43) Date of publication of application: 29.11.2023
(73) Proprietor: Infineon Technologies AG, 85579 Neubiberg (DE)
(72) Inventor: ZOGHLAMI, Feryel, 01099 Dresden (DE); HEINRICH, Harald, 01705 Freital (DE); SCHNEIDER, Germar, 01109 Dresden (DE); SEN, Okan Kamil, 80333 München (DE)
(74) Representative: 2SPL Patentanwälte PartG mbB

(56) References cited:
- WO-A1-2021/081459
- ZOGHLAMI FERYEL ET AL: "ToF/Radar early feature-based fusion system for human detection and tracking", 2021 22ND IEEE INTERNATIONAL CONFERENCE ON INDUSTRIAL TECHNOLOGY (ICIT), IEEE, vol. 1, 10 March 2021 (2021-03-10), pages 942 - 949, XP033925278, DOI: 10.1109/ICIT46573.2021.9453703
- PAVLO MOLCHANOV ET AL: "Multi-sensor system for driver's hand-gesture recognition", 2015 11TH IEEE INTERNATIONAL CONFERENCE AND WORKSHOPS ON AUTOMATIC FACE AND GESTURE RECOGNITION (FG), 1 May 2015 (2015-05-01), pages 1 - 8, XP055286586, ISBN: 978-1-4799-6026-2, DOI: 10.1109/FG.2015.7163132
- STEINBAECK JOSEF ET AL: "Design of a Low-Level Radar and Time-of-Flight Sensor Fusion Framework", 2018 21ST EUROMICRO CONFERENCE ON DIGITAL SYSTEM DESIGN (DSD), IEEE, 29 August 2018 (2018-08-29), pages 268 - 275, XP033420159, DOI: 10.1109/DSD.2018.00056

## Description

### TECHNICAL FIELD

The present application is generally related to robotics and is more particularly related to the use of sensor data in machine-learning-based control of robots operating in the vicinity of humans.

### BACKGROUND

Modern manufacturing plants are increasingly automated or digitalized. The term "Industry 4.0" has come to refer to the "fourth industrial revolution" and, in particular, to the digital transformation of manufacturing and production processes. In many conceptions of Industry 4.0, humans and robots are sharing the same workplace and are operating side by side, in what might be referred to as hybrid workplaces.

A main goal of new industrial technologies is increasing productivity using automated machines that operate 24 hours a day, seven days a week. To maximize productivity requires optimizing the "uptime" of these machines, i.e., maximizing the amount of time in which these machines are operating. This is especially important in high-volume manufacturing processes where the fabrication machinery is very expensive, such as semiconductor fabrication. Each production stop in semiconductor production reduces the output and the performance of the whole facility, and reduces the return on the very large investments needed to build the production line.

Therefore, safe collaboration between automation systems (e.g., robots) and humans becomes more and more important. In various collaborative environments, humans control the progress of every operation performed by robots, and humans adjust robots parameters to enhance their performance. Typically, however, this collaboration between robots and human is free from bidirectional interaction, with the collaboration instead being limited to humans acting on the machines.

While robots are normally equipped with various sensors, conventional robots have no "brains," and use sensor data directly, for automated decision making. In particular, this sensor data may be used to trigger alarms and/or stop operation of the machine, in response to sensor data indicating, for example, that an unknown object has entered into a protected region.

Current state-of-the art solutions, however, only detect objects in 2D data, using, for example, laser or infrared-based safety curtains. These curtains may be scanned, in some cases, to provide something that resembles three-dimensional (3D) coverage.

The machines perform different predefined tasks in a loop and need continuous guidance from humans. This means that the human operator is the only part of the manufacturing system that can proactively react when something unusual happens, to eliminate or reduce machine stoppage time. The machine part of the manufacturing system, in contrast, can conventionally only react, based on direct sensor data, performing reactive mitigation strategies such as reducing operation speed or stopping operator altogether, e.g., if a predefined threshold is reached or if a danger factor is otherwise detected from the sensor data.

Literature ZOGHLAMI FERYEL ET AL: "ToF/Radar early feature-based fusion system for human detection and tracking", 2021 22ND IEEE INTERNATIONAL CONFERENCE ON INDUSTRIAL TECHNOLOGY (ICIT), IEEE, vol. 1, 10 March 2021 (2021-03-10), pages 942-949, XP033925278, DOI: 10.1109/ICIT46573.2021.9453703 discloses a system presented which relies on the fusion of data coming from a Time of Flight (ToF) sensor and a 60 GHz radar sensor. The data are analyzed and evaluated using deep learning (DL) algorithms. The purpose is to detect humans and track their movements in the observed area. The resulted perception system can be installed somewhere in a room or on a moving system.

Literature PAVLO MOLCHANOV ET AL: "Multi-sensor system for driver's hand-gesture recognition", 2015 11TH IEEE INTERNATIONAL CONFERENCE AND WORKSHOPS ON AUTOMATIC FACE AND GESTURE RECOGNITION (FG), 1 May 2015 (2015-05-01), pages 1-8, XP055286586, DOI: 10.1109/FG.2015.7163132, ISBN: 978-1-4799-6026-2 discloses a multi-sensor system for accurate and power-efficient dynamic car-driver hand-gesture recognition, using a short-range radar, a color camera, and a depth camera, which together make the system robust against variable lighting conditions. The procedure jointly calibrates the radar and depth sensors. It is employed a convolutional deep neural network to fuse data from multiple sensors and to classify the gestures.

Literature STEINBAECK JOSEF ET AL: "Design of a Low-Level Radar and Time-of-Flight Sensor Fusion Framework", 2018 21 ST EUROMICRO CONFERENCE ON DIGITAL SYSTEM DESIGN (DSD), IEEE, 29 August 2018 (2018-08-29), pages 268-275, XP033420159, DOI: 10.1109/DSD.2018.00056 discloses an open hardware and software platform to efficiently fuse heterogeneous sensor data in an automotive/robotic context. The framework presented in this paper provides researchers a base platform in order to develop and evaluate sensor fusion strategies. In contrast to similar approaches, this framework exploits in particular the raw radar data and enables the fusion at low-level. The proposed system utilizes low-level data from radar sensors as well as indirect (e.g. 3D imaging) and direct (e.g. LIDAR) Time-of-Flight (ToF) sensors. After a configurable amount of preprocessing at sensor-level, the sensor data is transferred to a centralized platform and aligned temporally and spatially.

Patent Literature WO 2021/081459 A1 tracking a current and/or previous position, velocity, acceleration, and/or heading of an object using sensor data may comprise determining whether to associate a current object detection generated from recently received (e.g., current) sensor data with a previous object detection generated from formerly received sensor data.

Improvements in these manufacturing systems are needed.

### SUMMARY

There may be a demand for providing an improved system for a method and an apparatus. The present technology relates to a method of detecting and tracking human activities in the vicinity of a robot and an apparatus for detecting and tracking human activities in the vicinity of a robot as set out in the appended set of claims.

### BRIEF DESCRIPTION OF THE FIGURES

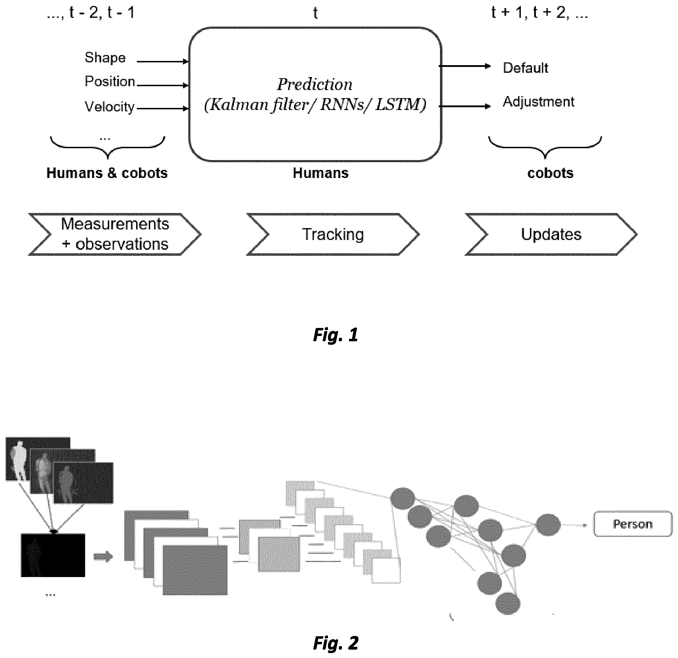

Figure 1 illustrates principles of the application of machine learning to the context of human-robot interaction.

### DETAILED DESCRIPTION

As noted above, smooth collaboration between humans and machines in a manufacturing environment can be difficult. One problem in developing smooth collaboration results from the fact that state-of-the-art systems often rely on automated responses based on two-dimensional (2D) data, such as data obtained from 2D laser-based line scanners, despite that the human-machine collaboration is taking place in a three-dimensional (3D) room. For improved collaboration, it is necessary to observe this room in real time, during the operation and collaboration process, with appropriate sensors and an appropriate control solution.

For 3D room protection, the system needs 3D sensor information. This may mean, for example, the use of at least a three-laser line scanner for horizontal and vertical directions. In many cases, more scanners are needed to have a full and safe 3D environment observation around the machine/robot area. If any one of these scanners detects an obstacle, the system will immediately stop operation, or reduce the machine's movement speed.

Other challenges in human-machine collaboration result from interactions between humans and robots and arise from a lack of intelligence in the machine side of the collaboration while performing a shared task. For example, when a human works nearby and enters the comfort zone of a collaborative robot, the robot will automatically stop. In many cases, the machine's operation needs to be relaunched by a manual action by the human. This causes a delay or stop of the production line and causes financial loss for the company.

Two key requirements for automated systems are in tension with one another. First, when automated systems have to work in the same area or in direct collaboration with humans, it is necessary to have a system that is fully compliant with safety regulations concerning man/machine collaboration. However, production lines need to run with a high uptime to be productive. Interaction between machine and human cannot be synchronized and produce unexpected machine stops. This is a general contradiction and is valid for all kind of interaction between machine and humans in industry-, service-, home- and health applications.

A technical problem for existing automated manufacturing systems is that the data coming from a laser scanner, for example, cannot readily be transformed into real 3D information characterizing the type, movement direction, and speed of a variety of different of objects or obstacles, such as humans, other autonomous guided vehicles (AGVs), transport systems, tables, etc. This means the systems will stop or reduce their operating speed in every case of obstacle detection, even when the intrusion is small and/or short. This leads to many small stops and reduces the productivity of the whole automation system. Another problem with existing systems is the high cost of the scanner system solutions. These problems prevent the increase of collaborative automation solutions for industry and home applications.

Some industries find alternative solutions by using advanced 3D red-green-blue (RGB) cameras for detection and classification purposes. A deep interpretation of the environment enabled by the use of such cameras has been demonstrated, compared to using passive 2D sensors. Although the usage of 3D RGB cameras provides a better perception of the surrounding area, these cameras remain very expensive and have limitations, especially regarding the special coverage of the entire environment.

The techniques, apparatuses, and systems described herein address these problems by use of a fusion system composed of multiple different sensors. The combination of data coming from the sensors can be used to obtain a much better perception of the surrounding area.

In particular, the combination of the data, i.e., the "fused" sensor data, helps to understand the surrounding mechanisms that present an ambiguity before. Two or more sensors processing together in a harmony not only cut with the previous passive use of the data but also extend the perception coverage on the temporal and special domains. This approach also increases the global resolution and improves measurements that, when used alone, might be poor representations of the system's environment.

Additionally, artificial intelligent (AI) applications may be used to filter the sensor data, thus facilitating efficient processing of large quantities of data that may include a lot of useless information. The term AI as used here is meant to refer to machine-learning (ML) techniques used to manipulate the data received from the sensors and to put that data to use for various purposes. More particularly, these ML techniques include deep learning algorithms, e.g., as implemented using adaptive neural networks (ANNs) or, more specifically, convolutional neural networks (CNNs) or recursive neural networks (RNNs) such as long short-term memory (LSTM) models. The output from these ML algorithms may include signals and alarms dedicated to monitor a shared collaborative area between humans and robots. Such a system can be installed in a fixed place and triggered each time a strange situation occurs, such as a production stoppage, unusual traffic, unexpected accident in the production line, unusual human behavior, etc. In this case the signal is mainly sent to operating robot for guidance and for correction of a further misunderstanding of a certain situation. The basic system mechanism for an application of machine-learning in the context of automated manufacturing is illustrated in Figure 1.

An automated manufacturing system using fused sensor data according to the techniques described herein may rely, in some embodiments, on combined information from one time-of-flight (ToF) sensor and one radar sensor. ToF sensors, alternatively referred to as ToF cameras, are imaging systems that employ time-of-flight measurement techniques to determine a distance between the sensor and an imaged subject, e.g., for each of several points of the image. Devices may utilize photonic mixer devices (PMDs). In these devices, an outgoing light source is modulated, e.g., with a radio-frequency (RF) carrier, and the relative phase shift of the light reflected from the subject is determined, to determine the round-trip distance traveled by the modulated light. Radar systems, of course, transmit an RF signal, typically pulsed or modulated, and measure the round-trip travel time from the reflected radar system. Doppler-based processing techniques may be used to determine a relative speed of the object from which the radar signal is reflected, in a direction towards or away from the radar sensor.

Thus, the ToF sensor gives information about the shape and the location of an imaged human body or other moving obstacle, yielding two-dimensional greyscale and depth images, while the radar gives information about the x, y, z and velocity of different points of the detected human, with, typically, far less resolution between the different points. Samples of ToF sensor data and radar sensor data obtained in various scenarios may be collected and used to train a neural network to detect peoples' presences in a room as well as their directions of movement and their speeds. In operation, the trained neural network can be used in real time, to detect and react to expected and unexpected scenarios, e.g., by triggering alarms or other automated actions in response to detecting unusual scenarios or known dangerous scenarios.

The training dataset is composed of frames obtained by combining data from both sensors. For example, each frame may be composed of three fused layers, comprising a greyscale image obtained from the ToF sensor, a depth image obtained from the ToF sensor, and a radar image or radar data points obtained from the radar sensor. The system may be tested in real time to track human behavior in an indoor environment.

Using the fused dataset described above as input for training the neural network, safety hazards and other robot-human conflicts can be avoided, by actively changing the behavior of the automated system based on predictions provided by the trained neural network's outputs. Proper predictive and active system behavior can be defined by the following behaviors:
- the system goes into a full stop only when necessary from a safety standpoint;
- the system is safely and automatically restarted, and continues work, after an operational stop;
- the system adapts its behavior by temporary work-process adaptation, e.g., use by a mobile robot of alternative routes to reach a targeted position.

To achieve this behavior, the automation system needs sensors and accompanying systems to detect obstacles by type, movement direction, and speed, in a 3D space around the work area. The sensor information must be available in real time with the exact constraints on the timeliness of the information depending on tool operation speed, the number of humans in the work area, and the layout of the automated system.

This can be done with an intelligent combination of data from both of the sensor types described above, i.e., the ToF sensor and a radar sensor. As was described above, the sensor data is fused in a way that the information from both sensor can be used to train a neuronal network to classify obstacles in front of the sensor view. Additional sensor information can be used to detect velocity and movement direction of classified objects as well. It is possible to combine a number of double sensors for a view that fully surrounds an automated system or a workspace, to protect up to 360 degree sensing. Processing of the fused sensor data can thus provide a high-resolution 3D perception of the environment with a wide spatial and temporal coverage, e.g., up to 360 degrees of coverage, at distances up to and greater than 4 meters, at frame rates up to and exceeding 40 frames per second (fps).

The fused sensor data will be delivered to the system for active reaction, to prevent conflict situations or to control temporary work process adaption.

A system based on sensor fusion as described herein can be either implemented in a fixed place on top of a hybrid workplace or on mobile robots. For example, in the semiconductor industry or in the automotive industry, there is a close interaction between humans and robots in different phases of the whole manufacturing process. Six-degree-of-freedom (6DOF) robots are widely used and can present a danger for humans. This is because these robots sometimes apply large forces to fulfill their tasks, regardless of the external conditions. Therefore, safety plays an important role in a shared workplace, i.e., a workplace in which both humans and robots are working. While in many industries and applications robots are equipped with sensor-based systems using laser scanners, these devices are not the best choice to establish an on-going active communication between both humans and robots.

Ideally, a robot system would have senses and a brain that operate very much like that of a human. **In** this case, the robot could communicate with the human and even protect himself from him. The systems described herein mimic this human-like brain, in that the "senses" correspond to the fused sensor data provided by the sensors while the "brain" is the additional intelligence added on top, to process the fused sensor data and to provide the robot with the ability to recognize and classify the objects that surround his environment. The result is a system like a safety eye that might guide the robot's movements (loading/unloading, assembly, pick & place, etc.) or help an AGV to navigate smoothly in a complex environment without causing accidents. The robot is able to recognize and locate objects and humans and track their movements.

In areas and applications where the safety requirements are less strong, e.g., because the power of the AGV or robotics systems is much less, in comparison to heavy industrial applications, sensor fusion can be applied using relatively cheap sensors including edge computing solutions - for example for service robots in medical or home/outpatient care. These robots can also be found in shops for cleaning or making inventory jobs or at home for entertainment or for taking care of kids, for example. Again, these systems might be applied to a robot operating in a fixed workspace, or to a mobile AGV, in various embodiments. There are thus various scenarios in which the inventive system described herein can be used, e.g., for industrial robots and semiconductor fab automation. The systems can be used in mobile or stationary robotics. In mobile robots, the problems are similar to those in autonomous cars. In autonomous environments, robots and humans are sharing the same working area. In these applications, the sensors and supporting systems may be attached to the autonomous moving vehicle. In other implementations, the sensors and supporting systems can be placed so as to obtain field of view that includes a full field of view of the working area of the stationary or limited linear motion robotics system. In either case, the system can detect unexpected obstacles and any humans. This principle can be used in many different applications in the same way.

For example, the systems described herein can be placed in any environment like in underground stations and maybe entrance of factories to detect and count humans and also we can extract their behavior in the environment. The systems can be placed in cars to detect humans also. Indeed, using radar, it is possible for the systems to detect vital signals of the humans and check whether they are sleeping while driving, or possible injured or unwell, etc. The systems can be used in service robotics to detect the owner of the systems or another assigned person to give the robot an ability to help that person. Using dynamic background detection and classification techniques, e.g., based on neural network technologies, the system can differentiate between allowed obstacles (including any movement of those obstacles) and unexpected obstacles.

An example implementation of the concepts described herein is a ToF/Radar fusion system for human detection and tracking. In this system, preprocessed data from both sensors is fused and used to train a model used to detect people and recognize there behaviors. The approach may be divided into two phases, a training phase and a testing/use phase.

During the training phase, depth and amplitude (grayscale) images are received from the ToF sensor(s). Contemporaneously, raw radar signals are received, e.g., from each of four receiving antennas. The angle of arrival of each signal is determined, and then the 3D coordinates (x,y,z) of each detected target are calculated (the number of targets depends on the number of used chirps). The doppler effect is also used to calculate the velocity of those targets, i.e., by detecting a frequency shift in the received signals, relative to the transmitted radar signal. After calibration of data coming from both sensors, it is possible to mask the targets on radar with the ToF image and construct a new image called radar image. This image includes the same objects, with shapes like those detected in the ToF image, but with additional information about the target velocity.

In the end, there are three channels, depth, grayscale and radar, fused in one image. Each of these 3-channel images corresponds to one sample in the training dataset for a neural network. These images can be collected for a variety of operating conditions for the automated system/robot, with a variety of human and other articles in the environment. The so-created samples and the considered neural network architecture for human are presented in Figure 2.

An optimized training set of data could be between might be composed of more than 1000 samples, for example, structured as follows: 80 % for training, 10% for validation and 10% for testing. The dataset result is then used to train a neural network for human detection. Since a typical dataset may be limited in terms of number of samples, the training for a particular environment may be done with a pre-trained network. For example, one might choose to work with a CNN-based object detection network. Experiments show that this may be trained with sample sets like those described above to achieve performance with 98% mean average precision and 29.2 detection frame rate for 50% intersection over union (tested on a standard GPU).

After training, a person model is an output. This person model may then be used for real time detection of running persons. Once detected, the system may define a region of interest around the person, e.g., a "bounding box." From the first channel, of each three-channel frame in which the person may be detected, the range at which the person is standing or moving may be detected. From the second channel, the optical flow of moving points may be detected and then the general movement of the person may be detected. This general movement may be represented by an arrow on a displayed image of the system's output, for example. Finally, the speed of movement of the detected person (v) may be read from the third channel. Data from successive frames may be filtered, in some embodiments, to smooth the results and suppress noise.

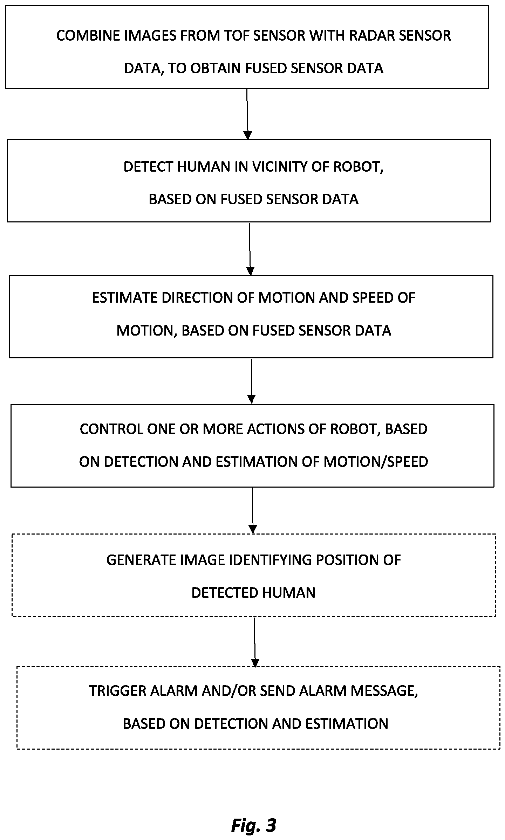

In view of the detailed examples and explanation provided above, it will be appreciated that Figure 3 illustrates an example method of detecting and tracking human activities in the vicinity of a robot, in accordance with several embodiments of the inventive concepts described herein. It should be appreciated that the illustrated method is intended to encompass examples of the techniques described above, and thus where the terms and terminology used below to describe the illustrated method differ from terms and terminology above, the latter should be interpreted to encompass the related terms above, except where the context clearly indicates otherwise.

As shown at block 310 of Figure 3, the method comprises combining one or more two-dimensional images obtained from a time-of-flight (ToF) sensor with contemporaneously obtained data from a radar sensor, to obtain fused sensor data. As shown at block 320, the method further comprises detecting the presence of a human in the vicinity of the robot, based on the fused sensor data. Finally, as shown at block 330, the method comprises estimating direction of motion and speed of motion of the human, based on the fused sensor data.

The method further comprises combining the one or more two-dimensional images and data obtained from the radar sensor with contemporaneously obtained data from one or more additional sensors. In other words, the various embodiments of the method shown in Figure 3 are not limited to use of only a ToF sensor and a radar sensor. Examples of the one or more additional sensors that might be used include any of: a second ToF sensor; a second radar sensor; a magnetic sensor; a photoelectric sensor; a sound sensor; an acceleration sensor; a vibration sensor; a chemical sensor; a humidity sensor; and a lidar sensor.

The detecting and estimating shown at blocks 320 and 330 are performed using a machine-learning model, the machine-learning model having been trained using two-dimensional ToF images and radar sensor data representative of an environment for the robot. This machine-learning model may be a deep learning model, e.g., an artificial neural network (ANN) or the like, such as a convolutional neural network (CNN). Note that the training may, in some instances or embodiments, be trained on the actual environment for the robot - this, of course, would be "representative" of the robot's environment. In other instances or embodiments, however, the machine-learning model could be trained on a similar environment, elsewhere.

The combining discussed above comprises aligning velocity and/or range data obtained from the radar sensor with depth and/or amplitude data in the two-dimensional images, for input into the machine-learning model. The method further comprises filtering this velocity and/or range data and the depth and/or amplitude data, to detect distinct features in the combined data, prior to the detecting and estimating steps. This filtering might comprise background subtraction.

In some embodiments or instances, the estimating of motion and speed of motion may comprise estimating direction of motion in three dimensions. Depending on the number and quality of sensors that are used, this may require the use of a series of the two-dimensional images, where, for example, the radar data is used to detect and measure motion in a direction normal to the two-dimensional images, while comparison of object location in successive images is used to detect and measure motion in directions lying in the plane of the image.

In various embodiments and instances, the method may further comprise controlling one or more actions of the robot, based on said detecting and estimating. This is shown at block 340 in Figure 3, which is illustrated with a dashed outline to indicate that it need not appear in all instances or embodiments of the illustrated method. As discussed above, this might involve stopping or starting operation of the robot, or altering a direction of motion, for example.

In some embodiments or instances, the method comprises generating an image, where the generated image includes a graphical feature identifying a position of the detected human and one or more graphical features indicating a direction and/or speed of the detected human. This is illustrated at block 350 in Figure 3. These graphical features might include, for example, the directional arrow described above; a length or other feature of the arrow might indicate a speed.

In some embodiments, the method comprises triggering an alarm and/or sending an alarm message, based on said detecting and estimating. This is shown at block 360 in Figure 3. This alarm might be designed to deter further movement of a human towards the robot, or to alert operators that robot operation has been suspended, in various embodiments or instances.

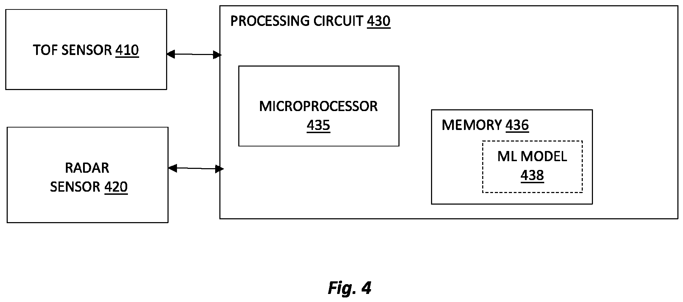

Figure 4 is a block diagram of an apparatus for detecting and tracking human activities in the vicinity of a robot, corresponding generally in its operation and capabilities to the method illustrated in Figure 3. This apparatus comprises a time-of-flight sensor 410 and a radar sensor 420, as well as a processing circuit 430 operatively coupled to the time-of-flight sensor and radar sensor. This processing circuit may comprise one or several microprocessors, microcontrollers, digital signal processors, or the like, and may comprise one or more application-specific circuits, customized digital logic, etc., in various embodiments. In the illustrated example, processing circuit comprises a microprocessor 435 coupled to memories 436 - it will be appreciated that this microprocessor and memories may take any of various well-known forms and utilize any of a wide variety of semiconductor technologies.

The processing circuit 430, in various embodiments, is configured, e.g., with program code stored in memories 436 for execution by microprocessor 435, to combine one or more two-dimensional images obtained from a time-of-flight (ToF) sensor with contemporaneously obtained data from a radar sensor, to obtain fused sensor data, to detect the presence of a human in the vicinity of the robot, based on the fused sensor data, and to estimate direction of motion and speed of motion of the human, based on the fused sensor data. It will be appreciated that the variations of the method described above for Figure 3 are applicable to the operation of processing circuit 430, as well.

Thus, for example, processing circuit 430 is configured to combine the series of two-dimensional images and data obtained from the radar sensor with contemporaneously obtained data from one or more additional sensors, in some embodiments or instances. The one or more additional sensors may comprise any one of the following, for example: a second ToF sensor; a second radar sensor; a magnetic sensor; a photoelectric sensor; a sound sensor; an acceleration sensor; a vibration sensor; a chemical sensor; a humidity sensor; and a lidar sensor.

Processing circuit 430 is configured to perform the detecting and estimating using a machine-learning model, the machine-learning model having been trained using two-dimensional ToF images and radar sensor data representative of an environment for the robot. The machine-learning model may be instantiated in program code and data stored in memory 436, for example, as shown in Figure 4 as ML model 438.

The processing circuit 430 is configured to align velocity and/or range data obtained from the radar sensor with depth and/or amplitude data in the two-dimensional images, for input into the machine-learning model. Processing circuit 430 is configured to filter the velocity and/or range data and the depth and/or amplitude data, to detect distinct features in the combined data, prior to the detecting and estimating. This filtering may comprise background subtraction, in some examples.

The processing circuit 430 may be configured to estimate direction of motion of the detected human in three dimensions, in some embodiments or instances. Processing circuit 430 may be configured to control one or more actions of the robot, as described above, based on the detecting of the human the estimating of its motion. **In** some embodiments or instances, processing circuit 430 may be configured to generate an image, the generated image including a graphical feature identifying a position of the detected human and one or more graphical features indicating a direction and/or speed of the detected human. Still further, processing circuit 430 may be configured to trigger an alarm and/or send an alarm message, based on the detecting and estimating.

**In** various embodiments, the techniques and apparatuses described above provide a sensor fusion system that combines and filters received data with reference to artificial intelligence (AI) in order to create signals for guiding robots and making them react in smart ways in uncertain environments. These systems represent a new face of an advanced human/robot collaboration.

## Claims

1. A method for detecting and tracking human activities in the vicinity of a robot, the method comprising:
combining (310) one or more two-dimensional images obtained from a time-of-flight (ToF) sensor (410) with contemporaneously obtained data from a radar sensor (420), to obtain fused sensor data;
detecting (320) the presence of a human in the vicinity of the robot, based on the fused sensor data; and
estimating (330) direction of motion and speed of motion of the human, based on the fused sensor data,
wherein said detecting (320) and estimating (330) are performed using a machine-learning model, the machine-learning model having been trained using two-dimensional ToF images and radar sensor data representative of an environment for the robot; and
aligning velocity and/or range data obtained from the radar sensor (420) with depth and/or amplitude data in the two-dimensional images, for input into the machine learning model; and
filtering the velocity and/or range data and the depth and/or amplitude data, to detect distinct features in the combined data, prior to said detecting and estimating.

2. The method of claim 1, wherein the method further comprises combining (310) the one or more two-dimensional images and data obtained from the radar sensor (420) with contemporaneously obtained data from one or more additional sensors, the one or more additional sensors comprising any one or more of:
a second ToF sensor;
a second radar sensor;
a magnetic sensor;
a photoelectric sensor;
a sound sensor;
an acceleration sensor;
a vibration sensor;
a chemical sensor;
a humidity sensor; and
a lidar sensor.

3. The method of claim 1, wherein said filtering comprises background subtraction.

4. The method of any one of the preceding claims, wherein said estimating (330) comprises estimating direction of motion in three dimensions.

5. The method of any one of the preceding claims, wherein the method comprises controlling (340) one or more actions of the robot, based on said detecting (320) and estimating (330).

6. The method of any one of the preceding claims, wherein the method comprises generating (350) an image, the generated image including a graphical feature identifying a position of the detected human and one or more graphical features indicating a direction and/or speed of the detected human.

7. The method of any one of the preceding claims, wherein the method comprises triggering (360) an alarm and/or sending an alarm message, based on said detecting and estimating.

8. An apparatus for detecting and tracking human activities in the vicinity of a robot, the apparatus comprising:
a time-of-flight sensor (410);
a radar sensor (420); and
a processing circuit (430) operatively coupled to the time-of-flight sensor (410) and
radar sensor (410) and configured to:
combine one or more two-dimensional images obtained from a time-of-flight (ToF) sensor (410) with contemporaneously obtained data from a radar sensor (420), to obtain fused sensor data,
detect the presence of a human in the vicinity of the robot, based on the fused sensor data; and
estimate direction of motion and speed of motion of the human, based on the fused sensor data;
perform the detecting and estimating using a machine-learning model, the machine-learning model having been trained using two-dimensional ToF images and radar sensor data representative of an environment for the robot; and
align velocity and/or range data obtained from the radar sensor with depth and/or amplitude data in the two-dimensional images, for input into the machine-learning model; and
filter the velocity and/or range data and the depth and/or amplitude data, to detect distinct features in the combined data, prior to the detecting and estimating.

9. The apparatus of claim 8, wherein the processing circuit (430) is configured to combine the series of two-dimensional images and data obtained from the radar sensor (420) with contemporaneously obtained data from one or more additional sensors, the one or more additional sensors comprising any one or more of:
a second ToF sensor;
a second radar sensor;
a magnetic sensor;
a photoelectric sensor;
a sound sensor;
an acceleration sensor;
a vibration sensor;
a chemical sensor;
a humidity sensor; and
a lidar sensor.

## Patentansprüche

1. Ein Verfahren zum Detektieren und Nachverfolgen menschlicher Aktivitäten in der Nähe eines Roboters, das Verfahren umfassend:
Kombinieren (310) eines oder mehrerer zweidimensionaler Bilder, die von einem Laufzeit-, ToF-, Sensor (410) erhalten werden, mit gleichzeitig erhaltenen Daten von einem Radarsensor (420), um fusionierte Sensordaten zu erhalten;
Detektieren (320) der Anwesenheit eines Menschen in der Nähe des Roboters basierend auf den fusionierten Sensordaten; und
Schätzen (330) der Bewegungsrichtung und der Bewegungsgeschwindigkeit des Menschen basierend auf den fusionierten Sensordaten,
wobei das Detektieren (320) und das Schätzen (330) unter Verwendung eines Maschinelles-Lernen-Modells durchgeführt werden, wobei das Maschinelles-Lernen-Modell unter Verwendung von zweidimensionalen ToF-Bildern und Radarsensordaten, die für eine Umgebung für den Roboter repräsentativ sind, trainiert wurde; und
Ausrichten von Geschwindigkeits- und/oder Entfernungsdaten, die von dem Radarsensor (420) erhalten werden, mit Tiefen- und/oder Amplitudendaten in den zweidimensionalen Bildern zur Eingabe in das Maschinelles-Lernen-Modell; und
Filtern der Geschwindigkeits- und/oder Entfernungsdaten und der Tiefen- und/oder Amplitudendaten, um vor dem Detektieren und Schätzen unterschiedliche Merkmale in den kombinierten Daten zu detektieren.

2. Das Verfahren gemäß Anspruch 1, wobei das Verfahren ferner ein Kombinieren (310) der einen oder der mehreren zweidimensionalen Bilder und Daten, die von dem Radarsensor (420) erhalten werden, mit gleichzeitig erhaltenen Daten von einem oder mehreren zusätzlichen Sensoren umfasst, wobei der eine oder die mehreren zusätzlichen Sensoren irgendeinen oder mehrere umfassen von:
einem zweiten ToF-Sensor;
einem zweiten Radarsensor;
einem Magnetsensor;
einem photoelektrischen Sensor;
einem Geräuschsensor;
einem Beschleunigungssensor;
einem Vibrationssensor;
einem chemischen Sensor;
einem Feuchtigkeitssensor; und
einem Lidar-Sensor.

3. Das Verfahren gemäß Anspruch 1, wobei das Filtern Hintergrundsubtraktion umfasst.

4. Das Verfahren gemäß einem der vorhergehenden Ansprüche, wobei das Schätzen (330) ein Schätzen der Bewegungsrichtung in drei Dimensionen umfasst.

5. Das Verfahren gemäß einem der vorhergehenden Ansprüche, wobei das Verfahren ein Steuern (340) einer oder mehrerer Aktionen des Roboters basierend auf dem Detektieren (320) und dem Schätzen (330) umfasst.

6. Das Verfahren gemäß einem der vorhergehenden Ansprüche, wobei das Verfahren ein Erzeugen (350) eines Bildes umfasst, wobei das erzeugte Bild ein grafisches Merkmal, das eine Position des detektierten Menschen identifiziert, und ein oder mehrere grafische Merkmale, die eine Richtung und/oder Geschwindigkeit des detektierten Menschen anzeigen, umfasst.

7. Das Verfahren gemäß einem der vorhergehenden Ansprüche, wobei das Verfahren ein Triggern (360) eines Alarms und/oder ein Senden einer Alarmmeldung basierend auf dem Detektieren und Schätzen umfasst.

8. Eine Vorrichtung zum Detektieren und Nachverfolgen menschlicher Aktivitäten in der Nähe eines Roboters, die Vorrichtung umfassend:
einen Laufzeitsensor (410);
einen Radarsensor (420); und
eine Verarbeitungsschaltung (430), die mit dem Laufzeitsensor (410) und
dem Radarsensor (410) wirksam gekoppelt ist und ausgebildet ist, um:
ein oder mehrere zweidimensionale Bilder, die von einem Laufzeit-, ToF-, Sensor (410) erhalten werden, mit gleichzeitig erhaltenen Daten von einem Radarsensor (420) zu kombinieren, um fusionierte Sensordaten zu erhalten,
die Anwesenheit eines Menschen in der Nähe des Roboters basierend auf den fusionierten Sensordaten zu detektieren; und
die Bewegungsrichtung und die Bewegungsgeschwindigkeit des Menschen basierend auf den fusionierten Sensordaten zu schätzen;
das Detektieren und das Schätzen unter Verwendung eines Maschinelles-Lernen-Modells durchzuführen, wobei das Maschinelles-Lernen-Modell unter Verwendung von zweidimensionalen ToF-Bildern und Radarsensordaten, die für eine Umgebung für den Roboter repräsentativ sind, trainiert wurde; und
Geschwindigkeits- und/oder Entfernungsdaten, die von dem Radarsensor erhalten werden, mit Tiefen- und/oder Amplitudendaten in den zweidimensionalen Bildern zur Eingabe in das Maschinelles-Lernen-Modell auszurichten; und
die Geschwindigkeits- und/oder Entfernungsdaten und die Tiefen- und/oder Amplitudendaten zu filtern, um vor dem Detektieren und Schätzen bestimmte Merkmale in den kombinierten Daten zu detektieren.

9. Die Vorrichtung gemäß Anspruch 8, wobei die Verarbeitungsschaltung (430) ausgebildet ist, die Serie von zweidimensionalen Bildern und Daten, die von dem Radarsensor (420) erhalten werden, mit gleichzeitig erhaltenen Daten von einem oder mehreren zusätzlichen Sensoren zu kombinieren, wobei der eine oder die mehreren zusätzlichen Sensoren eines oder mehrere umfassen von:
einem zweiten ToF-Sensor;
einem zweiten Radarsensor;
einem Magnetsensor;
einem photoelektrischen Sensor;
einem Geräuschsensor;
einem Beschleunigungssensor;
einem Vibrationssensor;
einem chemischen Sensor;
einem Feuchtigkeitssensor; und
einem Lidar-Sensor.

## Revendications

1. Procédé de détection et de suivi des activités humaines à proximité d'un robot, le procédé comprenant le fait de :
combiner (310) une ou plusieurs images bidimensionnelles obtenues à partir d'un capteur de temps de vol, ToF, (410) avec des données obtenues simultanément à partir d'un capteur radar (420), pour obtenir des données de capteur fusionnées ;
détecter (320) la présence d'un être humain à proximité du robot, sur la base des données de capteur fusionnées ; et
estimer (330) la direction de mouvement et la vitesse de mouvement de l'être humain, sur la base des données de capteur fusionnées,
dans lequel le fait de détecter (320) et le fait d'estimer (330) sont effectuées en utilisant un modèle d'apprentissage automatique, le modèle d'apprentissage automatique ayant été entraîné en utilisant d'images ToF bidimensionnelles et de données de capteur radar représentatives d'un environnement pour le robot ; et
aligner des données de vitesse et/ou de gamme obtenues à partir du capteur radar (420) avec des données de profondeur et/ou d'amplitude dans les images bidimensionnelles, en vue d'une entrée dans le modèle d'apprentissage automatique ; et
filtrer les données de vitesse et/ou de gamme et les données de profondeur et/ou d'amplitude pour détecter des caractéristiques distinctes dans les données combinées, avant ladite détection et ladite estimation.

2. Procédé selon la revendication 1, dans lequel le procédé comprend en outre le fait de combiner (310) le ou les images et données bidimensionnelles obtenues à partir du capteur radar (420) avec des données obtenues simultanément à partir d'un ou plusieurs capteurs supplémentaires, le ou les capteurs supplémentaires comprenant l'un ou plusieurs d' :
un deuxième capteur ToF ;
un deuxième capteur radar ;
un capteur magnétique ;
un capteur photoélectrique ;
un capteur de son ;
un capteur d'accélération ;
un capteur de vibrations ;
un capteur chimique ;
un capteur d'humidité ; et
un capteur lidar.

3. Procédé selon la revendication 1, dans lequel le fait de filter comprend la soustraction d'arrière-plan.

4. Procédé selon l'une des revendications précédentes, dans lequel le fait d'estimer (330) comprend le fait d'estimer la direction de mouvement dans trois dimensions.

5. Procédé selon l'une des revendications précédentes, dans lequel le procédé comprend le fait de contrôler (340) une ou plusieurs actions du robot, sur la base de ladite détection (320) et de ladite estimation (330).

6. Procédé selon l'une des revendications précédentes, dans lequel le procédé comprend le fait de générer (350) une image, l'image générée comprenant une caractéristique graphique identifiant une position de l'être humain détecté et une ou plusieurs caractéristiques graphiques indiquant une direction et/ou une vitesse de l'être humain détecté.

7. Procédé selon l'une des revendications précédentes, dans lequel le procédé comprend le fait de déclencher (360) une alarme et/ou le fait d'envoyer un message d'alarme, sur la base de ladite détection et de ladite estimation.

8. Un appareil pour détecter et suivre des activités humaines à proximité d'un robot, l'appareil comprenant :
un capteur de temps de vol (410) ;
un capteur radar (420) ; et
un circuit de traitement (430) couplé de manière opérationnelle au capteur de temps de vol (410) et capteur radar (410) et configuré pour :
combiner une ou plusieurs images bidimensionnelles obtenues à partir d'un capteur de temps de vol, ToF, (410) avec des données obtenues simultanément à partir d'un capteur radar (420), pour obtenir des données de capteur fusionnées,
détecter la présence d'un être humain à proximité du robot, sur la base des données de capteur fusionnées ; et
estimer la direction de mouvement et la vitesse de mouvement de l'être humain, sur la base des données de capteur fusionnées,
effectuer le fait de détecter et le fait d'estimer en utilisant un modèle d'apprentissage automatique, le modèle d'apprentissage automatique ayant été entraîné en utilisant d'images ToF bidimensionnelles et de données de capteur radar représentatives d'un environnement pour le robot ; et
aligner des données de vitesse et/ou de gamme obtenues à partir du capteur radar avec des données de profondeur et/ou d'amplitude dans les images bidimensionnelles, en vue d'une entrée dans le modèle d'apprentissage automatique ; et
filtrer les données de vitesse et/ou de gamme et les données de profondeur et/ou d'amplitude pour détecter des caractéristiques distinctes dans les données combinées, avant ladite détection et ladite estimation.

9. Appareil selon la revendication 8, dans lequel le circuit de traitement (430) est configuré pour combiner la série d'images bidimensionnelles et des données obtenues à partir du capteur radar (420) avec des données obtenues simultanément à partir d'un ou plusieurs capteurs supplémentaires, le ou les capteurs supplémentaires comprenant l'un ou plusieurs d' :
un deuxième capteur ToF ;
un deuxième capteur radar ;
un capteur magnétique ;
un capteur photoélectrique ;
un capteur de son ;
un capteur d'accélération ;
un capteur de vibrations ;
un capteur chimique ;
un capteur d'humidité ; et
un capteur lidar.
